# EUROPEAN PATENT SPECIFICATION

(11) **EP 0 415 570 B1**
(45) Date of publication and mention of the grant of the patent: **13.03.1996**
(21) Application number: 90308494.5
(22) Date of filing: 01.08.1990
(51) Int. Cl.: B23K 35/30

(54) **Corrosion resistant stainless steel**
Rostfreier korrosionsfester Stahl
Acier inoxydable résistant à la corrosion

(30) Priority: 08.09.1989 JP 234231/89; 21.09.1989 JP 245682/89; 01.08.1989 JP 199919/89; 01.08.1989 JP 199920/89; 01.08.1989 JP 199921/89
(43) Date of publication of application: 06.03.1991
(73) Proprietor: Ishikawajima-Harima Heavy Industries Co., Ltd., Tokyo 100 (JP)
(72) Inventor: Morishige, Norio, Yokosuka-shi, Kanagawa-ken (JP); Hirano, Kenji, Yokohama-shi, Kanagawa-ken (JP); Ishikawa, Kiyofumi, Hiratsuka-shi, Kanagawa-ken (JP); Furuya, Shuji, Yokohama-shi, Kanagawa-ken (JP)
(74) Representative: Hackett, Sean James

(56) References cited:
- JP-A-61 123 497
- PROC. INT. CONGRESS MET. CORROS., vol. 2, 1984, pages 636-638, Ottawa, CA; P.G. MOORE et al.: "Corrosion resistant surface alloys prepared by laser processing"
- IDEM
- METAL PROGRESS, vol. 131, no. 3, March 1987, page 26, Metals Park, Ohio, US; N. N.: "Steel tubes clad by laser"
- PATENT ABSTRACTS OF JAPAN, vol. 10, no. 311 (M-528)[2367], 23rd October 1986;
- & JP-A-61 123 497 (MITSUBISHI HEAVY IND. LTD) 11-06-1986
- WPIL/DERWENT, abstract no. 83-762472, 1983, week 37, Derwent Publications Ltd, London, GB; & JP-A-58 133 398 (NIPPON KOKAN) 09-08-1983
- PATENT ABSTRACTS OF JAPAN, vol. 4, no. 120 (M-28), 8th August 1980; & JP-A-55 77 599 (FUJIKI KOSAN) 11-06-1980
- METAL SCIENCE & HEAT TREATMENT, vol. 29, nos. 3-4, March-April 1987, pages 177-183, Plenum Publishing Corp., New York, US; L.S. LYAKHOVICH et al.: "Laser alloying"

## Description

### BACKGROUND OF THE INVENTION

The present invention generally relates to a technology for further improving the corrosion resistance inherent in stainless steel, more particularly to clad stainless steel remarkably improved in corrosion resistance and a cladding material for use in forming a cladding layer on the surface of stainless steel by the irradiation of a laser to improve the corrosion resistance. The invention also relates to a method of further improving the corrosion resistance of stainless steel, a device for forming a coating material film of uniform thickness on the inner surface of a pipe for the purpose of providing a coating layer of corrosion resistance or the like thereon, and a torch for irradiation of laser beams which is particularly suitable for irradiating a laser to the inner surface of a pipe.

In general, stainless steel is widely used in buildings, bridges, atomic plants, chemical plants and so on. The stainless steel inherently possesses good corrosion resistance, because, in the atmosphere, chromium in its structure combines with oxygen of the air to form a thin passive coating of chrome oxide on the surface of the stainless steel. However, in case the stainless steel is brought into contact with a corrosive fluid, such as hydrogen sulfide, chlorine ion and a hot water containing oxygen, pitting corrosion or cracks due to corrosion are liable to occur in the surface of the stainless steel.

Hitherto, when the potentiality of corrosion in the surface of the stainless steel is of concern, it has been considered to cope with this problem by using an acid or the like so as to strengthen its passive coating.

Even if a passive coating on the surface of the stainless steel is strengthened by acids or the like, however, it is impossible to prevent a corrosion phenomenon from gradually progressing unless a condition, in which the stainless steel is kept in contact with a corrosive fluid, is removed.

In view of the above, the present inventors have been thought of forming a cladding layer on the surface of the stainless steel with the use of a laser. This formation is particularly useful as a coating for the inner surface of a pipe to improve the corrosion resistance of pipes and the like in facilities for a nuclear reactor.

Meanwhile, hitherto, as a method of forming a film of a coating material for the purpose of providing a corrosion resisting coating layer on the surface of a metal, or for another purpose, brush coating, spraying or the like has been used. With these methods, although a coating material film of uniform thickness can readily be formed when a surface to be treated is exposed to the outside, it is difficult to form the same on the surface hiding inside, such as the inner face of a pipe. Particularly, it is impossible to partially form a coating material film at a deep position within the pipe. For the formation of such a cladding layer as described above, however, uniformly application of a coating material on the surface of stainless steel is necessary even when the objective to be treated is in a pipe shape. Thus, such a device, which is capable of readily forming a coating material of uniform thickness on the inner surface of a pipe, is desired.

Further, a laser has been applied to perforating in a plate, cutting and so forth, and various types of laser irradiation devices for these ends have been provided. However, only few devices among them are applicable to objectives which have surfaces of peculiar shapes to be treated. In particular, hitherto, there has been provided no device which can readily irradiate a laser to the inner surface of a pipe of a small diameter. The reasons for this are the technical difficulty that a device, or a torch, is disposed close to a portion to be treated where the material vigorously splashes and which reaches a high temperature, and little need of such a working. For the formation of a cladding layer described above, however, a device for readily irradiating a laser to the inner surface of a pipe with good operation efficiency is required. Thus, a torch capable of overcoming the above technical difficulty is desired.

A corrosion resistant stainless steel comprising a fused cladding layer formed on a surface of a stainless steel substrate containing chromium and nickel, the cladding layer being an Fe-Cr-Ni-Mo alloy, is disclosed by P.G. Moore and E. McCaffery in "Corrosion resistant surface alloys prepared by laser processing", Proc. Int. Congress Met. Corros. (1984), vol. 2, pp. 636-638. Wrought 304 stainless steel was used as the substrate. In the surface alloys it was desired to maintain a chromium content of 18-20%, to increase the nickel content to about 10%, and to produce molybdenum contents of up to 8%. Up to thirty alternating layers of pure Mo, a 56% Cr - 46% Ni [sic] alloy, and a 90% Ni - 10% Cr alloy were applied by sputter deposition and fused by a laser beam. The pitting resistance of the resulting iron-base alloys was studied by anodic polarisation in 0.1 M NaCl. By X-ray fluorescence analysis a nominally 3% Mo surface alloy was found to contain 19.0% Cr, 15.6% Ni, and 4.0%Mo, and a nominally 6% Mo surface alloy was found to contain 16.5% Cr, 10.1% Ni, and 5.7% Mo. The pitting potentials for the "3% Mo" surface alloys were comparable to that of wrought 316 stainless steel, whereas the "6% Mo" surface alloys did not pit at potentials up to oxygen evolution.

Laser processing is also discussed by L.S. Lyakhovich et al. in "Laser Alloying", Metal Science and Heat Treatment, 29 (1987), Nos. 3-4, pp. 177-183.

JP-A-55-77599 (Patent Abstr. of Japan, vol. 4, no. 120, 1980) discloses a cladding layer containing 16 - 18 wt.% Cr, 12 - 16 wt.% Ni, 2 - 3 wt.% Mo, balance Fe, applied to a cast iron cylinder.

JP-A-61-123 497 (Patent Abstr. of Japan, vol. 10, no. 311, 1986) discloses a cladding layer containing 23 - 28 wt.% Cr, 3 - 8 wt.% Ni, 1 - 3 wt.% Mo, balance Fe, applied to a carbon steel, low alloy steel, or austenitic stainless steel substrate.

The present invention has been accomplished in view of the foregoing, and it is an object of the invention to provide stainless steel which possesses remarkable corrosion resistance in addition to the corrosion resistance inherent in the stainless steel due to its passive coating.

The present invention provides a corrosion resistant stainless steel comprising a fused cladding layer formed on a surface of a stainless steel substrate containing chromium and nickel, the cladding layer being an Fe-Cr-Ni-Mo alloy composed of 40 to 60 wt.% Fe, 15 to 50 wt.% Cr, more than 16 to 30 wt.% Ni, and 1 to 3 wt.% Mo.

The invention also provides a method of making such a corrosion resistant stainless steel, in which a surface of a stainless steel substrate containing chromium and nickel is coated with a material containing chromium, nickel, and molybdenum, and the coating material is fused so as to mix with a part of the substrate and produced a cladding layer composed of 40 to 60 wt.% Fe, 15 to 50 wt.% Cr, more than 16 to 30 wt.% Ni, and 1 to 3 wt.% Mo; the coating material comprising a metal powder which is composed of 20-60 wt.% Cr, 30-70 wt.% Ni, and the remainder Mo, or is composed of 20-60 wt.% Cr, 20-60 wt.% Ni, less than 20 wt.% Mo, and the remainder Fe.

The method may comprise the steps of: smoothing a surface of stainless steel; applying a coating material onto the surface of the stainless steel to form a coating film, the coating material being a mixture of a binder and a metal powder composed of a chrome-system composite; and burning the coating film by irradiating a laser to form a cladding layer for adding further corrosion resistance to the surface of the stainless steel.

The method may make use of a device for shaping a coating film on an inner surface of a pipe, which comprises a bar for insertion into a pipe, a coating film shaping jig attached to a side of the insertion bar, the jig being provided at an outer side thereof with at least one guide surface and at least one shaping surface spaced radially inward from the the guide surface by a distance corresponding to a thickness of a coating film to be formed, and means interposed between the coating film shaping jig and the insertion bar for urging the coating film shaping jig radially outward.

In practising the invention, one can use a torch for irradiating laser beams, which comprises a cylindrical torch body attached to an end of an optical fiber transmitting laser beams, lens means attached in the torch body for converging the laser beams irradiated from the optical fiber in a longitudinal direction of the torch body, a cylindrical body tube attached to an end of the torch body movably in the longitudinal direction thereof, the body tube being formed in a side wall thereof with an aperture, and a reflex mirror attached in the body tube for reflecting the laser beams having passed through said lens means to emit the laser beams outward through the aperture.

The torch body is preferable to be provided with a pipe passage in communication with the inside thereof for allowing a purge gas to be supplied. Further, the outer peripheral surfaces of the torch body and the body tube may be finished into metallically glossy faces as mirrors. It is preferable that the reflex mirror is made of a metal, such as copper, and has a reflecting surface which is mirror-finished. Alternatively, the reflex mirror may comprise a mirror plate for serving a reflecting surface which is attached by adhesion to a support member attached to the body tube.

In the stainless steel according to the first aspect of the invention, as the cladding layer is formed on the surface, the exposed surface of this cladding layer comes into contact with a corrosive fluid.

In this case, Cr, which is one component of the cladding layer and contributes to the corrosion resistance, may be set at an arbitrary amount larger than an amount of Cr in the base metal of the stainless steel. This makes it possible to provide very good corrosion resistance as compared with that of the stainless steel by itself. Additionally, the inclusion of a proper amount of Mo in the cladding layer prevents the occurrence of pitting corrosion in particular. Thus, the cladding layer having a large amount of Cr is formed on the surface of the stainless steel and, therefore, the corrosion resistance thereof can further be improved. This clad stainless steel brings about an excellent effect that it makes remarkable resistance to corrosion even in an environment wherein the inherent corrosion resistance of the stainless steel relying upon its passive coating is spoiled, namely in a condition that such factors as the presence of a corrosion fluid, the existence of residual tensile stress and so on overlaps with one another. Further, by the inclusion of a proper amount of Mo in the cladding layer, the occurrence of pitting corrosion can effectively be prevented.

The above material according to the second aspect of the invention, comprising the metal powder, is applied onto the surface of stainless steel to form a coating film by the method according to the third aspect of the invention. The coating film is then burnt by the irradiation of the laser to form the cladding layer. At this time, Cr, Ni and Mo composing the coating film are fused by the irradiation of the laser to mix with a fused part of the base metal of the stainless steel, so that the components of the former and those of the latter are diluted with one another. Accordingly, the composition of the cladding layer becomes substantially intermediate between the composition of the metal powder and that of the stainless steel. The thus formed cladding layer is remarkably improved in corrosion resistance as compared with the corrosion resistance of the stainless steel by itself, and can prevent cracks and the like from occurring. Further, by virtue of the addition of a suitable amount of Mo to Cr and Ni, the occurrence of pitting corrosion can be prevented.

A suitable amount of Fe may be added besides Cr, Ni and Mo. This addition brings about the result that the spreading of the cladding layer on the surface of the stainless steel is enhanced to further smooth the finished surface of the cladding layer. In addition to the above effects of the improved corrosion resistance excelling that of the stainless steel itself and the prevention of pitting corrosion.

It is preferable that the cladding material further comprises a binder which contains C. This component of the binder causes the coating film to be black, so that the reflection the laser beams can be lessened to improve the efficiency of burning. Further, the binder may contain a suitable amount of SiO₂ for improving the heat resistance of the coating film, making it possible to effect uniform burning while keeping the metal powder adhering onto the surface of the stainless steel.

With the cladding material according to the second aspect of the invention, therefore, the cladding layer is formed on the surface of the stainless steel by the irradiation of the laser. Accordingly, the corrosion resistance inherent in the stainless steel is further improved to provide remarkable corrosion resistance. Further, as this formation is performed in such a simple way that the coating film of the mixed material is burnt by laser beams, the method according to the third aspect of the invention is applicable to any surface of the stainless steel which requires corrosion resistance. The cladding material and the method according to the invention can bring about such excellent effects.

With the coating film shaping device according to the fourth aspect of the invention, after having applied a coating material of a sufficient thickness onto the pipe inner surface at a predetermined position thereof, the coating film shaping jig is inserted into the pipe together with the insertion bar to be pressed against the predetermined position. In this condition, upon rotating the insertion bar, the coating film of a predetermined thickness can be shaped at the predetermined position. More particularly, the coating film shaping jig is pressed against the pipe inner surface by the urging means to bring the guide surface into contact with the pipe inner surface, and the jig is rotated with the shaping surface being spaced from the pipe inner surface by the thickness of the film to be formed. Accordingly, an extra coating material over the necessary for forming the film of the predetermined thickness, which corresponds to the distance between the guide surface and the shaping surface, is torn off by a shaping portion of the coating film shaping jig. Thus, the coating material applied at the predetermined position is shaped into the film of a uniform thickness.

This coating film shaping device brings about an effect that the formation of a coating film of uniform thickness on the inner surface of a pipe, which has been extremely difficult hitherto, can readily be realized by a simple working of applying a coating material onto the pipe inner surface and, then, rotating the jig inserted into the pipe.

With the laser irradiation torch according to the fifth aspect of the invention, the distance between the focal point of the laser beams and the torch body can be adjusted with easy by moving body tube in the longitudinal direction of the torch body. After having adjusted the distance in accordance with inner diameter of a pipe to be treated, the torch is inserted in the pipe along the inner surface thereof, and the rays of the laser are supplied through the optical fiber, while rotating the torch body or moving the same in the longitudinal direction of the pipe. Then, laser can successively be irradiated to every portion of the inner surface of the pipe with the focal point situated in the vicinity of the pipe inner surface.

At this time, the rays of the laser irradiated from the optical fiber in the torch body are converged by the lens, changed in direction by the reflex mirror to be emitted laterally of the body tube, or in a direction toward the pipe inner surface, and form the convergent point of the rays in the vicinity of the pipe inner surface. By moving the body tube to change the focal point, only one torch can readily be adapted 'to pipes of various inner diameters.

When the pipe passage is provided in the torch body, a purge gas can be supplied through the pipe passage into the torch body during the operation. A part of the purge gas supplied in the torch body and the body tube blows out of the aperture through which the laser is emitted. This prevents a coating material and so forth splashed by the irradiation of the laser from entering the torch through the aperture. Accordingly. malfunctions due to the coating material and the like stuck on the reflecting face and so on are prevented. Further, the necessity of frequently doing the maintenance of the torch for replacement of the reflex mirror and so forth on which foreign substances stick is avoided.

Further, in case the outer surfaces of the torch body and the body tube are formed as mirrors, because the reflexibility is increased, the torch absorbs little energy of the reflected rays of the laser, and is not raised in temperature. Therefore, any cooling device is not necessary to be provided for preventing the deformation and deterioration of parts due to a high temperature, and the torch can be reduced in size or formed in a compact size. Moreover, when the reflex mirror, which is relatively short in life span as compared with other parts due to the heat by the laser and has to be periodically replaced, is made of a metal, such as copper, since the metal is relatively cheap in cost and good in processing, the manufacturing and maintenance costs of the torch can be reduced. On the other hand, when the reflecting face is formed by the mirror plate attached by adhesion to the support member, renewal of the reflex mirror can be made by replacing only the mirror plate. This reduces costs for the maintenance of the torch as compared with the case where the entire reflex mirror has to be replaced.

### BRIEF DESCRIPTION OF THE DRAWINGS

Figs. 1 to 4 are sectional views of stainless steel showing the processes of the corrosion resistance improving method according to an embodiment of the third aspect of the invention, wherein Fig. 1 shows the surface condition of the stainless steel before the treatment, Fig. 2 shows the surface condition after a smoothing treatment, Fig. 3 shows the condition after a film of a coating material has been formed, and Fig. 4 shows the condition after a cladding layer has been formed.

Fig. 5 is a sectional view separately showing, on the left half part thereof, a surface condition after a corrosion test of the corrosion resistance stainless steel according to an embodiment of the first aspect of the invention and, the right half part, that of SUS stainless steel without the surface treatment.

Fig. 6 is a perspective view of the device for shaping a coating film on a pipe inner surface according to an embodiment of the fourth aspect of the invention.

Fig. 7 is a perspective view of the device for shaping a coating film on,a pipe inner surface according to another embodiment of the fourth aspect of the invention.

Fig. 8 is a sectional side view of the torch for irradiating a laser according an embodiment of the fifth aspect of the invention.

Fig. 9 is a side view of a reflex mirror for explanation of the laser irradiation torch according to another embodiment of the fifth aspect of the invention.

### DETAILED DESCRIPTION OF THE PREFERRED EMBODIMENTS

Description will now be made on embodiments of various aspects of the invention with reference to the drawings.

First, the corrosion resistance stainless steel according to an embodiment of one aspect of the invention will be described in conjunction with the corrosion resistance improving method and the cladding material according to embodiments of other aspects of the invention.

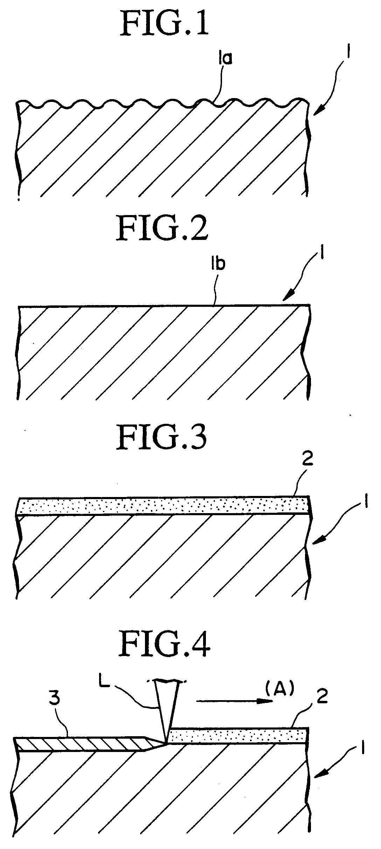

Figs. 1 to 4 respectively show the surface conditions of stainless steel, which are different from one another in accordance with the progress of the method. In these figures, reference letter L represents laser beams, reference numeral 1 denotes the base metal of the stainless steel, 2 denotes a coating film of the material, and 3 denotes a cladding layer.

### 〈SURFACE SMOOTHING PROCESS〉

As shown in Fig. 1, in a condition before the corrosion resistance improving treatment, the stainless steel 1, formed in a plate or a pipe, may have roughness 1a which remains in its surface and so forth, or in the inner surface and so forth in the case of a pipe, due to scratches and the like during the manufacturing and subsequent processes. In such a case, the portion to the stainless steel, which need improving in corrosion resistance, is surface-finished by machining or surface polishing into a smooth with an precision of, for instance, the finish mark ∇∇∇ (surface roughness 1.5 - 6S : JIS) so as to be a smoothed surface 1b as shown in Fig. 2.

### 〈DEGREASING PROCESS〉

From the smooth-faced stainless steel 1, oils, fats, oxide scales, etc. stuck during the surface smoothing process are removed by cleaning with an organic solvent, pickling or the like.

After this degreasing process, however, the treated stainless steel 1 is directly exposed to the atmospheric air once again. Accordingly, the smoothed surface 1b comes into contact with oxygen of the air to be naturally formed with a thin passive coating.

### 〈COATING FILM FORMING PROCESS〉

As a main material for forming the cladding layer 3 which will be described later, a metal powder of a chrome-system composite is prepared. The compounding ratio of the chrome-system composite is set as shown in Table 1, and an average particle size of the metal powder is, for instance, 40 µm.

**TABLE 1**

| (Examples of compounding of the metal powder) | | | | |
|---|---|---|---|---|
| COMPOUNDING RATIO | Cr | Ni | Mo | Fe |
| * COMPOSITION 1 | 6 | 2 | 1 | 1 |
| COMPOSITION 2 | 4 | 4 | 1 | 1 |
| COMPOSITION 3 | 6 | 3 | 1 | 0 |

| | | | | |
|---|---|---|---|---|
| * Comparative example | | | | |

Further, as a binder for holding the metal powder, a heat resisting paint of organic solvent system or the like is prepared. The characteristics required for this binder are not to evaporate or discompose during the irradiation of a laser to remain within the cladding layer 3, and to have sufficient heat resistance for holding the metal powder on the surface to the base metal to be treated (stainless steel) at a slight distance from the laser beams. Moreover, in order to prevent the occurrence of hydrogen cracking in the base metal, the binder is preferable to be of a less hydrogen component and, for instance, a black paint set as shown in Table 2 is used.

**TABLE 2**

| (Examples of compounding of the binder) | |
|---|---|
| MATERIAL | COMPONENT RATIO (WT.%) |
| AL₂O₃ | LESS THAN 40 |
| SiO₂ | 10 - 60 |
| C | 20 - 50 |
| H | LESS THAN 2 |

The mixed coating material of the metal powder comprising the chrome-system composite and the binder is applied on the surface of the stainless steel 1 as shown in Fig. 3, and is forcibly or naturally dried to form the coating film 2. A thickness of the coating film 2 in this case is, for instance, about 500 µm, and the coating film 2 used has heat resistance for adherently holding the metal powder on the surface of the stainless steel 1 up to a temperature of about 250° C.

### 〈BURNING PROCESS WITH LASER IRRADIATION〉

As shown in Fig. 4, is heated to be fused in the atmospheric air by the laser beams L, such as YAG laser. The laser beams L are moved as shown by an arrow (A) in Fig. 4 to successively burn the coating film 2. Then, fused portions behind the laser beams L come into solidification to form the cladding layer 3.

The burning treatment with the YAG laser is conducted to effect the burning in the atmospheric air in such a condition that the laser output is 600 W, the diameter of a spot in which the laser beams are converged is 0.8 - 2.5 mm, the speed of movement of the laser beams is 0.2 - 1.0 m/min., and the width of a bead, which is formed as the cladding layer when the laser beams pass one time, is 1.0 - 2.0 mm.

In this case, when the coating film 2 is in black color, namely when mixing a suitable amount of carbon black with the binder shown in Table 2, it is possible to lessen reflection of the laser beams L at the surface of the coating film 2 to improve the thermal efficiency. Further, when a suitable amount of SiO₂ is mixed with the binder, the coating film 2 is improved in its adhesion at a high temperature. Accordingly, the metal powders in Table 1 can keep adhering onto the surface of the stainless steel 1 up to a high temperature of. for instance, about 250° C when the combustion heat by the laser beams L is transmitted to the stainless steel 1 to gradually increase the temperature thereof. Thus, the metal powder can be burnt while uniformly adhering onto the surface of the stainless steel 1, making it possible to improve the operation efficiency of burning.

### 〈COMPONENTS OF CLADDING LAYER〉

By the laser beams L, a part of the base metal of the stainless steel 1, as well as the coating film 2, is fused. Both the components of the coating film 2 and those of the base metal of the stainless steel become a fused condition, resulting in a phenomenon that they mix with one another in the fused portion. Accordingly, the fused portion is of composition which is substantially intermediate in component ratio between the composition of the metal powder and that of the stainless steel 1. When the fused portion has solidified, therefore, formed is the cladding layer 3 as shown in Table 3.

**TABLE 3**

| (Component ratio of the cladding layer) | |
|---|---|
| COMPONENT | COMPONENT RATIO (WT.%) |
| Cr | 15 - 50 |
| Ni | 16 - 30 |
| Mo | 1 - 3 |
| Fe | 40 - 60 |

When the thickness of the coating film 2 is about 500 µm, the cladding layer formed through burning by the laser beams L is about 250 - 300 µm in thickness, and the component ratio of the cladding layer 3 varies in accordance with compounding ration of the metal powder.

The clad stainless steel thus obtained and having the above components has a smooth surface with no defect, such as cracks and so forth in the cladding layer 3.

In particular, the metal powders of composition 1 and composition 2 in Table 1 are good in the surface finish of the cladding layers 3. This is considered to result from the improved spreading of the cladding layers over the surface of the stainless steel 1 by the addition of a suitable amount of Fe.

### 〈EXAMPLE OF CORROSION TEST〉

For evaluating the corrosion resistance, clad stainless steel samples #1 to #15 were prepared, which had respective cladding layers different in component ratio. These samples were made of SUS 304 plates of 5 mm thickness and SUS 304 pipes of 35 mm inner diameter and by forming coating films of 500 µm with different coating materials on the surfaces of the plates and the inner surfaces of the pipes and burning these films by the laser. A corrosion test was performed to immerse the samples for thirty three hours in a boiling solution which contained NaCl of 5 % concentration and was adjusted the PH value to 1 by adding sulfuric acid, and brought about the result shown in Table 4. In the evaluation column of Table 4, the mark X represents the occurrence of heavy corrosion, the mark Δ represents the occurrence of light corrosion, and the mark ○ represents no occurrence of corrosion.

**TABLE 4**

| (Result of the corrosion test) | | | | | | | |
|---|---|---|---|---|---|---|---|
| SAMPLE | COMPOUNDING RATIO OF METAL POWDER | | | | | EVALUATION | |
| | Cr | Ni | Mo | Nb | Fe | CRACK | CORROSION RESISTANCE |
| # 1 * | 10 | | | | | OCCURRENCE | X |
| # 2 * | 9 | 1 | | | | NONE | X |
| # 3 * | 7 | 3 | | | | OCCURRENCE | X |
| # 4 * | 9 | | 1 | | | OCCURRENCE | △ |
| # 5 * | 7 | | 3 | | | OCCURRENCE | △ |
| # 6 * | 9 | | | 1 | | NONE | X |
| # 7 * | 7 | | | 3 | | NONE | X |
| # 8 * | 9 | | | | 1 | NONE | X |
| # 9 * | 7 | | | | 3 | NONE | X |
| # 10 | 2 | 7 | 1 | | | NONE | ○ |
| # 11* | 3 | 6 | 1 | | | NONE | ○ |
| # 12* | 6 | 3 | 1 | | | NONE | ○ |
| # 13 | 2 | 6 | 1 | | 1 | NONE | ○ |
| # 14* | 4 | 4 | 1 | | 1 | NONE | ○ |
| # 15 | 6 | 2 | 1 | | 1 | NONE | ○ |

| | | | | | | | |
|---|---|---|---|---|---|---|---|
| * Comparative example | | | | | | | |

The ratios of components Cr, Ni, Mo and Fe of the respective cladding layers formed are as follows: (the underlined samples are in accordance with the invention)
sample #1 - 38.2 : 0.0 : 0.38 : 61.4,
sample #2 - 31.06: 8.5 : 0.08 : 59.8,
sample #3 - 35.3 : 13.0 : 0.12 : 51.7,
sample #4 - 39.2 : 13.5 : 0.0 : 47.4,
sample #5 - 39.1 : 6.3 : 2.14 : 52.5,
sample #6 - 50.8 : 4.4 : 9.08 : 35.8,
sample #7 - 54.0 : 4.6 : 0.12 : 41.3,
sample #8 - 73.05: 1.6 : 0.08 : 24.8,
sample #9 - 28.4 : 7.0 : 0.47 : 64.1,
sample #10 - 19.3 : 24.1 : 2.13 : 54.4,
sample #11 - 19.7 : 17.6 : 1.76 : 61.0,
sample #12 - 14.3 : 8.1 : 2.70 : 74.9,
sample #13 - 19.4 : 25.6 : 3.06 : 52.0, and
sample #14 - 30.0 : 12.3 : 2.45 : 55.3.

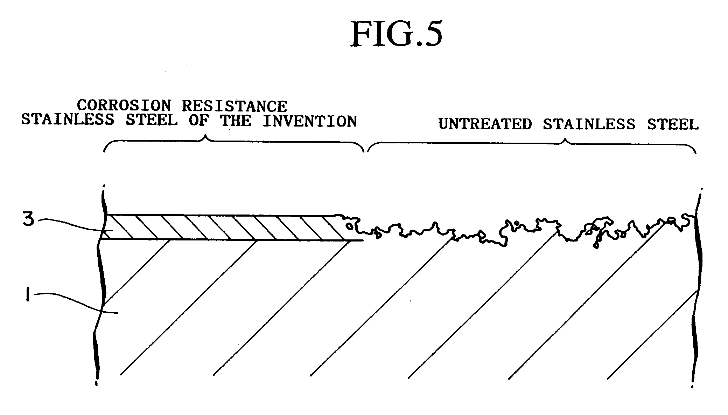

A similar test was performed on a test piece without the surface treatment, which was the base metal of SUS 304 stainless steel itself and had no cladding layer formed thereon. As a result, heavy corrosion occurred in this test piece as shown on the right half part in Fig. 5, whereas the sample #15 formed with the suitable cladding layer 3 was smooth at its surface and kept in its previous state before the corrosion test as shown on the left half part in Fig. 5.

It was verified from the above result of the corrosion test that samples #10 to #15 of the clad stainless steel shown in Table 4 had no occurrence of any crack and brought about an excellent effect on the corrosion resistance.

Incidentally, in case the surface to be treated is the inner surface of a stainless steel pipe, the laser beams, such as YAG laser, can be irradiated with use of the devices according to embodiments of other aspects of the invention, which will be described later. Accordingly, the method of the invention is applicable to the pipe of a small diameter, for instance, that of about 35 mm diameter.

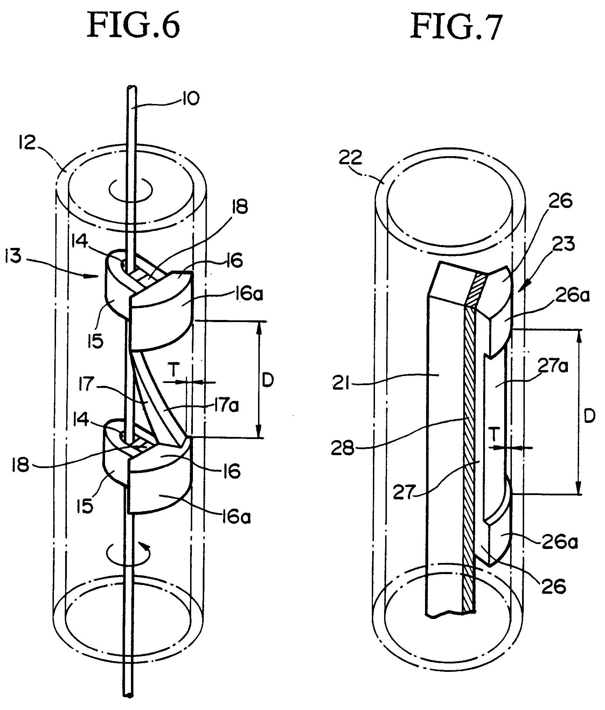

The device for shaping a coating film on the inner surface of a pipe according to an embodiment of still another aspect of the invention will be described with reference to Fig. 6.

In Fig. 6, denoted by reference numeral 10 is an insertion bar. The insertion bar 10 is capable of being inserted into a pipe 12, on an inner surface of which a coating film is to be formed, and is adapted to be driven by a driving device, not shown in the figure, to rotate on its own axis.

A coating film shaping jig 13 is attached to this insertion bar 12. The coating film shaping jig 13 is composed of mounting portions 15, 15 each having elongated holes 14 through which the insertion bar 10 is inserted, guide portions 16, 16 which are respectively attached to one ends of the mounting portions 15, 15, and a shaping portion 17 provided to interconnect the guide portions 16, 16. The guide portions 16, 16 have respective guide surfaces 16a which are formed to come into contact with the inner surface of the pipe 12. Further, the shaping portion 17 is situated inward of the guide surfaces 6a by a thickness T of the coating film to be formed, and has a shaping surface 17a formed into a band shape which is spirally twisted as a whole with respect to the insertion bar 10.

The two guide portions 16, 16 are spaced from each other in the longitudinal direction of the pipe by a length D corresponding to an extent through which the coating film is to be formed. In other words, a length of the shaping portion 17 in the longitudinal direction of the pipe is set to be equal to the length D.

Biasing or urging devices 18 are provided in the respective elongated holes 14, 14 of the coating film shaping jig 13 to be interposed between the insertion bar 10 and rear sides of the guide portions 16. The urging devices 18 comprising, for instance, springs or the like, exert forces for widening the distances between the insertion bar 10 and the respective rear sides of the guide portions 16, so that the coating film shaping jig 13 as a whole is urged toward the pipe inner surface to bring the guide surfaces 16a of the guide portions 16 into contact with the pipe inner surface.

Here, in case the pipe 12 is arranged in a vertical direction as shown in Fig. 6 and the coating film is to be formed at a specific position of the inner surface of the pipe, a necessary amount of a coating material is first applied to the specific position. Then, the insertion bar 10 is axially inserted into the pipe 12, and the shaping portion 17 of the coating film shaping jig 13 is located at the specific position. In this state, when the insertion bar 10 is rotated in a direction as indicated by an arrow in Fig. 6. the coating film of the predetermined thickness T can be formed through the extent which is of a width corresponding to the length D.

More particularly, the coating film shaping jig 13 is pressed against the inner surface of the pipe 12 by the urging devices, and is rotated along the pipe inner surface in a condition that the guide surfaces 16a, 16a of the guide portions 16, 16 are kept in contact with the pipe inner surface and the shaping surface 17a of the shaping portion 17 is spaced from the pipe inner surface by the thickness T of the film. Accordingly, an extra coating material, which is over the necessary for forming the film of the predetermined thickness T, is torn off by the shaping portion 17 of the coating film shaping jig 13, so that the coating material applied onto the inner surface of the pipe 12 is shaped into the film of a uniform thickness.

At this time, as the shaping surface 17a is twisted with respect to the axis of the pipe, the coating material is always spread upward to spread over the entire inner periphery of the pipe so as to form the coating film. During the processing, therefore, drooping or lowering of the coating material is prevented. Further, even when the insertion bar is not located correctly along the axis of the pipe, the coating film shaping jig is moved to absorb such a difference, so that the same can readily be rotated with the guide portion thereof being always kept in contact with the pipe inner surface.

According to the coating film shaping device of the above embodiment, brought about is an effect that forming of the coating film of uniform thickness, which has been extremely difficult hitherto, can readily be realized by a simple working of applying the coating material onto the pipe inner surface and, then, rotating the jig inserted into the pipe.

Further, even when the pipe is arranged along a vertical direction, as the coating material is prevented from drooping or lowering during the processing, a defect, such as uneven portions partially formed in the coating film due to drooping or lowering coating material, etc., is avoided, and the coating film of good quality is obtained.

Moreover, the coating film shaping device of the above embodiment has the shaping portion 17 situated between the two guide portions 16, so that the distance D between the guide portions corresponds to a width of which the coating film is formed. Therefore, the device has an effect that the extent of formation of the coating film can be set with accuracy by the adjustment of this distance D. Further, the thickness of the coating film can readily be set by adjusting the size T.

Furthermore, since the coating film shaping device of the above embodiment can be operated by a very simple operation of rotating the insertion bar about its own axis, it has an effect that the driving device may be a simple device which uses the known art.

Subsequently, the coating film shaping device according to another embodiment of the fourth aspect of the invention will be described with reference to Fig. 7.

In Fig. 7, denoted by reference numeral 21 is an insertion bar. The insertion bar 21 is capable of being inserted into a pipe 22, on an inner surface of which a coating film is to be formed, and is adapted to be driven by a driving device, not shown in the figure, to rotate round along the pipe inner surface.

A coating film shaping jig 23 is attached to the insertion bar 12 on the side thereof facing the inner surface of the pipe 22. The coating film shaping jig 23 includes guide portions 26, 26 which have respective guide surfaces 26a formed to come into contact with the inner surface of the pipe 22, and a shaping portion 27 provided to interconnect the guide portions 26, 26 and having a guide surface 27a which is formed to lie inward of the guide surfaces 26a by a distance corresponding to the thickness T of the coating film to be formed.

The two guide portions 26, 26 of the coating film shaping jig 23 are spaced from each other in the longitudinal direction of the pipe by the length D corresponding to an extent through which the coating film is to be formed. In other words, a length of the shaping portion 27 in the longitudinal direction of the pipe is set to be equal to the length D.

A biasing or urging device 28 is interposed between the coating film shaping jig 23 and the insertion bar 21. The urging device 28 is made of a material of good resilience, such as rubber or the like.

In case of forming the coating film at a specific position of the inner surface of the pipe 22 which is arranged, for instance, along a vertical direction as shown in Fig. 7, a necessary amount of a coating material is first applied to the specific position. Then, the insertion bar 21 is inserted into the pipe 22, and the coating film shaping jig 23 is pressed against the specific position. In this state, when the insertion bar 21 is rotated round along the pipe inner surface, similarly to the case of the device shown in Fig. 6, the coating film of the predetermined thickness T can be formed through the extent which is of a width corresponding to the length D.

The coating film shaping device of the second embodiment brings about an effect, similarly to the device shown in Fig. 6, that the formation of the coating film of uniform thickness, which has been extremely difficult hitherto, can readily be realized by a simple working of applying the coating material onto the pipe inner surface and, then, rotating the jig inserted into the pipe.

Incidentally, although in the device shown in Fig. 7, the shaping surface 27a of the coating film shaping jig 26 is illustrated to be substantially equal in width to the guide surfaces 26, the shaping surface is not limited solely to this specific form. For example, the shaping surface may be in a band shape of a small width which is twisted with respect to the insertion bar 21 as is in the case of the device shown in Fig. 6. In this case, similarly to the device shown in Fig. 6, an effect of preventing lowering or drooping of the coating material is brought about.

Contrarily, such a jig as the coating film shaping jig 23 of the device shown in Fig. 7 may be used in the device shown in Fig. 6.

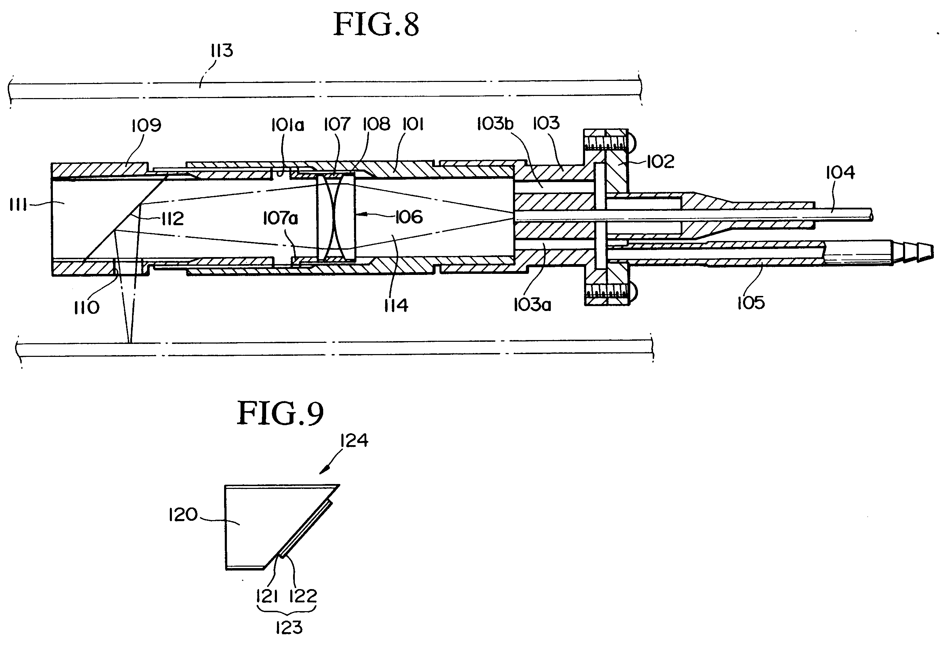

Description will next be made on the laser irradiation torch according to an embodiment of still further aspect of the invention with reference to Fig. 8.

Fig. 8 is a sectional side view of the laser irradiation torch, wherein reference numeral 101 denotes a torch body. The torch body 101 is formed in a substantially cylindrical shape as a whole, and is formed with screw threads 101a in an inner periphery at one end of the torch body. An optical fiber 104 and a pipe passage 105 are connected via fixing flanges 102, 103 to the opposite end the torch body 101 to the one end at which the screw threads are formed. The optical fiber 104 is connected to a laser generating apparatus, not shown in the figure, to transmit the rays of a laser. The end of the optical fiber is disposed on the center line of the torch body to irradiate the laser beams along the center line. The pipe passage 105 is in communication with the inside of the torch body 101 through flow passages 103a, 103b formed in the fixing flange 103. and is connected to a gas cylinder or a compressor, not shown, for supplying a purge gas into the inside of the torch body.

In the torch body 101, a lens assembly 106 is provided to converge the laser beams irradiated from the optical fiber 4. The lens assembly 106 is composed of two semi-spherical lenses, and is fixed at its outer periphery in a cylindrical member 107. The cylindrical member 107 has a flanged portion 107a brought in screw engagement with the screw threads 101a, and the lens assembly is installed in the torch body 101 via the cylindrical member 107. The spaces in the torch body 101 on the both sides of the lens assembly 106 are communicated with each other through a through hole (not shown) and a clearance 108 between the cylindrical member 107 and the inner surface of the torch body 101, which through hole is formed in the vicinity of the flanged portion 107a of the cylindrical member 107. Thus, the inside of the torch body 101 is not blocked even the provision of the lens assembly 106.

Incidentally, the lens assembly 106 is not solely.limited to the assembly of the two semi-cylindrical lenses, and may be composed of a double-convex lens or a meniscus lens.

A body tube 109 is provided at the free end of the torch body 101. The body tube 109 is formed in a substantially cylindrical shape as a whole. The body tube 109 is formed in outer periphery at one end thereof with screw threads which are brought in screw engagement with the screw threads 101a, and through a side wall on the other end side thereof with a small hole 110. The body tube 109 screws at the one end thereof in the torch body 101 to be installed on the torch body movably in the longitudinal direction thereof.

The diameter of the small hole 110 is preferable to be as small as possible. For instance, when the outer diameter of the torch is 20 mm, it is desirable for the diameter of the small hole to be less than 5 mm.

A reflex mirror 111 is provided in the inside on the free end side of the torch body 101. The reflex mirror 111 is formed of a column member which is made of copper and is obliquely cut at an angle of 45° with respect to the center line of the member. The cut end of the member is mirror-finished to form a reflecting face 112. The reflex mirror 111 screws at its outer periphery in the torch body 101 to be detachably installed thereon.

The mirror-finish of the reflecting face 112 may be performed by, for instance, buffing or the like. Further, the installation position and posture of the reflex mirror 111 are so set that it reflects the laser beams having passed through the lens assembly 106 to emit the same through the small hole 110 laterally of the body tube 109.

The outer surfaces of the torch body 101 and the body tube 109 may coated with aluminum or nitriding titanium to be formed in mirrors.

With the torch for irradiation of the laser structured as above, in accordance with the inner diameter of a pipe in which the laser is to be irradiated, the body tube 109 is rotated to move for adjustment of the focal position of the laser beams irradiated from the optical fiber 104. After the adjustment, the torch is inserted in the pipe 113 along the center line thereof, and the rays of the laser are supplied, while rotating or moving the torch, with the purge gas being supplied through the pipe passage 105. Then, the laser can successively be irradiated to every position of the inner surface of the pipe 113 with the converging point located in the vicinity of the inner surface of the pipe 113.

More particularly, at this time, the laser beams 114 irradiated from the optical fiber 104 are converged by the lens assembly 106, and are changed in direction by the reflex mirror 111 to be emitted laterally of the body tube 109, or toward the inner surface of the pipe 113, through the aperture 110 of the body tube 109 to form a convergent point in the vicinity of the inner surface of the pipe 113.

During the operation, the purge gas is being supplied in the torch body 101 and the body tube 109, and a part of the gas blows out of the small hole 110 through which the laser is emitted. Accordingly, in combination with the effect that the diameter of the hole 110 is set to be small, a coating material and so on splashed by the irradiation of the laser are prevented from entering the torch through the aperture 110.

Further, when the outer surfaces of the torch body 101 and the body tube 109 are formed as mirrors, as the reflexibility is made large, the torch absorbs very little energy of the reflected rays of the laser irradiated and, therefore, is not raised in temperature.

As the purge gas, an inert gas, such as argon, air or the like may be used. Further, as a source of the purge gas, any device may be used if it can supply the gas at a higher pressure than a pressure in the pipe 113 which is the atmosphere of the torch. For example, as described above, a gas bomb or cylinder, or a gas compressor may be used for this end. Moreover, in case a flexible optical fiber is used as the optical fiber 104 and a purge gas supply hose connected to the pipe passage 105 is flexible, rotation and movement of the torch can readily be performed by a driving device which uses the conventional art.

The torch shown in Fig. 8 and described above brings about the following merits. Namely, the torch is capable of being inserted in a pipe and readily and successively irradiating a laser to every portion of the pipe, and can prevent a coating material and the like splashed by the laser at that time from entering the torch. Accordingly, malfunctions due to the coating material and so forth stuck on the reflecting face or the like are prevented. This also avoids the necessity of frequently doing the maintenance of the torch for replacing the reflex mirror or the like on which foreign substances stick.

In consequence, the irradiation of a laser to the inner surface of a small diameter pipe can readily be performed with good operation efficiency, which irradiation has been difficult hitherto unless overcoming the unfavorable condition that the irradiation is carried out with a torch being close to the objective to be irradiated the laser and, therefore, foreign substances tend to enter the torch.

Further, the torch of the above embodiment absorbs very little energy of the reflected rays of the laser and, thus, the temperature of the torch does not raise. Therefore, it is not necessary to provide a cooling device for preventing the deformation or deterioration of parts because of a high temperature, and the torch can be reduced in size.

Moreover, the reflex mirror 111, which is relatively short in life span due to the temperature by the laser as compared with other parts and has to be periodically replaced, is formed of copper which is cheap in cost and good in workability. Therefore, reduction in the manufacturing and maintenance costs of the torch can be realized.

Subsequently, the torch according to the another embodiment of the fifth aspect of the invention will be described with reference to Fig. 9.

The torch of the second embodiment is featured by the structure of a reflex mirror, and the other structural portions and the operation of this torch are identical with those of the torch of the first embodiment.

More particularly, the reflex mirror 124 is composed of a support member 120 and a mirror plate 123 as shown in Fig. 9. The support member 120 is formed in substantially the same configuration as that of the reflex mirror 111 of the first embodiment, and is adapted to be installed on the body tube 109. The mirror plate 123 comprises a base plate 121 which is made of a carbon fiber reinforced resin, and on one side of which formed is a coating layer 122 of aluminum or gold. The mirror plate 123 is attached by adhesion to the obliquely cut end of the support member 120 with the coating layer 122 facing outward to form a reflecting face.

According to the torch of the second embodiment, in addition similar merits to those of the torch of the first embodiment, the following result is achieved. For renewal of the reflex mirror 124, only the mirror plate 123 adhered to the support member 120 may be replaced. Accordingly, the maintenance cost for this end can be reduced as compared with the case where the whole of the reflex mirror has to be replaced.

## Claims

1. A corrosion resistant stainless steel comprising a fused cladding layer formed on a surface of a stainless steel substrate containing chromium and nickel, the cladding layer being an Fe-Cr-Ni-Mo alloy composed of 40 to 60 wt.% Fe, 15 to 50 wt.% Cr, more than 16 to 30 wt.% Ni, and 1 to 3 wt.% Mo.

2. A stainless steel as claimed in claim 1, wherein the chromium content of the cladding layer is higher than that of the substrate.

3. A method of making a corrosion resistant stainless steel according to claim 1, in which a surface of a stainless steel substrate containing chromium and nickel is coated with a material containing chromium, nickel, and molybdenum, and the coating material is fused so as to mix with a part of the substrate and produced a cladding layer composed of 40 to 60 wt.% Fe, 15 to 50 wt.% Cr, more than 16 to 30 wt.% Ni, and 1 to 3 wt.% Mo; the coating material comprising a metal powder which is composed of 20 to 60 wt.% Cr, 30 to 70 wt.% Ni, and the remainder Mo, or is composed of 20 to 60 wt.% Cr, 20 to 60 wt.% Ni, less than 20 wt.% Mo, and the remainder Fe.

4. A method as claimed in claim 3, wherein the cladding layer has a composition which is substantially intermediate in component ratio between the composition of the coating material and the composition of the substrate.

5. A method as claimed in claim 3 or 4, in which the coating material is fused by laser radiation.

6. A method as claimed in any of claims 3 to 5, wherein a binder is mixed with the metal powder.

7. A method as claimed in claim 6, wherein the binder contains C: 20 to 50 wt.%; Al₂0₃: less than 40 wt.%; Si0₂: 10 to 60 wt.%, and H: less than 2 wt.%.

8. A method as claimed in claim 6 or 7, wherein the binder is black in colour.

9. A method as claimed in any of claims 3 to 8, including, before application of the coating material, degreasing the surface of the substrate and exposing the surface to atmospheric air to form a passive coating thereon.

10. A method as claimed in any of claims 3 to 9, wherein laser beams are converged at the coating material and moved along the surface of the substrate.

11. A method as claimed in any of claims 3 to 10, wherein the said surface is an inner surface of a pipe, and the coating material is shaped into a coating film by a device comprising an insertion member (10) for insertion into the pipe, a coating film shaping jig (13) attached to a side of the insertion member (10), the jig (13) being provided at an outer side thereof with at least one guide surface (16a) and at least one shaping surface (17a) spaced radially inward from the guide surface (16a) by a distance (T) corresponding to the thickness of the coating film to be formed, and means (18) interposed between the jig (13) and the insertion member (10) for urging the jig (13) radially outward.

12. A method as claimed in claim 11, wherein two guide surfaces (16a) are arranged at a distance (D) therebetween in the axial direction of the pipe, and the shaping surface (17a) extends between the two guide surfaces (16a).

13. A method as claimed in claim 11 or 12, wherein the shaping surface (17a) is formed in a band shape which is spirally twisted with respect to an axis of the insertion member (10).

14. A method as claimed in any of claims 11 to 13, wherein the insertion member (10) is rotatable about an axis thereof, with the guide surface (16a) being kept in contact with the inner surface of the pipe.

15. A method as claimed in any of claims 11 to 14, wherein the insertion member (10) is rotatable round within the pipe along the inner surface thereof, with the guide surface (16a) being kept in contact with the inner surface.

16. A method as claimed in any of claims 3 to 15, wherein the coating material is irradiated with laser radiation by a torch comprising: a generally cylindrical torch body (101) attached to an end of an optical fiber (104) transmitting laser beams; lens means (106) mounted in the torch body (101) for converging the laser beams irradiated from the optical fiber (104) in a longitudinal direction of the torch body: a generally cylindrical tube (109) attached to an end of the torch body (101) and movable in the longitudinal direction thereof, the tube (109) having an aperture (110) in its side wall; and a mirror (111;124) mounted in the tube (109) for reflecting the laser beams having passed through the lens means (106) so that the laser beams are emitted through the aperture (110).

17. A method as claimed in claim 16, wherein purge gas is supplied through a pipe passage (105) in communication with the inside of the torch body (101).

18. A method as claimed in claim 16 or 17, wherein outer peripheral surfaces of the torch body (101) and the tube (109) are finished into metallically glossy faces as mirrors.

19. A method as claimed in any of claims 16 to 18, wherein the mirror (111) is made of metal, preferably copper, and has a reflecting surface (112) which is mirror-finished.

20. A method as claimed in any of claims 16 to 18, wherein the mirror (124) comprises a mirror plate (123) forming a reflecting surface, the mirror plate being attached by adhesion to a support member (120) mounted in the tube (109).

## Patentansprüche

1. Korrosionsfester rostfreier Stahl, der eine geschmolzene plattierende Schicht aufweist, die auf einer Oberfläche eines rostfreien Stahl-Trägerkörpers gebildet ist, der Chrom und Nickel enthält, und bei dem die plattierende Schicht eine Fe-Cr-Ni-Mo-Mischung ist, die 40-60 Gew.% Fe, 15-50 Gew.% Cr, mehr als 16-30 Gew.% Ni und 1-3 Gew. % Mo enthält.

2. Korrosionsfreier Stahl nach Anspruch 1, **dadurch gekennzeichnet**, daß der Chromgehalt der plattierenden Schicht höher ist als der des Trägerkörpers.

3. Verfahren zur Herstellung eines korrosionsfesten rostfreien Stahls nach Anspruch 1, bei dem eine Oberfläche eines rostfreien Stahl-Trägerkörpers, der Chrom und Nickel enthält, mit einem Material, das Chrom, Nickel und Molybdän enthält, beschichtet wird und das beschichtende Material geschmolzen wird, so daß es sich mit einem Teil des Trägerkörpers mischt, und eine plattierende Schicht erzeugt wird, die aus 40-60 Gew.% Fe, 15-50 Gew.% Cr, mehr als 16-30 Gew.% Ni und 1-3 Gew.% Mo zusammengesetzt ist; bei dem das beschichtende Material ein Metallpulver enthält, das aus 20-60 Gew.% Cr, 30-70 Gew.% Ni und dem Rest Mo zusammengesetzt ist oder aus 20-60 Gew.% Cr, 20-60 Gew.% Ni, weniger als 20 Gew.% Mo und dem Rest Fe zusammengesetzt ist.

4. Verfahren nach Anspruch 3, bei dem die plattierende Schicht eine Zusammensetzung hat, die im Bestandteilverhältnis im wesentlichen zwischen der Zusammensetzung des beschichtenden Materials und der Zusammensetzung des Trägerkörpers ist.

5. Verfahren nach Anspruch 3 oder 4, bei dem das beschichtende Material durch Laserstrahlung geschmolzen wird.

6. Verfahren nach einem der Ansprüche 3 bis 5, bei dem ein Bindemittel mit dem Metallpulver vermischt ist.

7. Verfahren nach Anspruch 6, bei dem das Bindemittel enthält C : 20 - 50 Gew.% ; Al₂O₃ : weniger als 40 Gew.% ; SiO₂ : 10-60 Gew.%, und H : weniger als 2 Gew.%.

8. Verfahren nach Anspruch 6 oder 7, bei dem das Bindemittel in der Farbe schwarz ist.

9. Verfahren nach einem der Ansprüche 3 bis 8, das vor der Anwendung des beschichtenden Materials umfaßt ein Entfetten der Oberfläche des Trägerkörpers und ein Aussetzen der Oberfläche einer atmosphärischen Luft, um darauf eine passive Schicht zu bilden.

10. Verfahren nach einem der Ansprüche 3 bis 9, bei dem man Laserstrahlen sich dem beschichtenden Material nähern läßt und entlang der Oberfläche des Trägerkörpers bewegen läßt.

11. Verfahren nach einem der Ansprüche 3 bis 10, bei dem die Oberfläche eine innere Oberfläche eines Rohres ist und das beschichtende Material zu einem beschichtenden Film in einer Vorrichtung gestaltet wird, die ein Einsatzglied (10) zum Einsetzen in das Rohr, ein den beschichtenden Film gestaltendes Gerät (13), das an eine Seite des Einsatzgliedes (10) angebracht ist, wobei das Gerät (13) versehen ist an einer seiner äußeren Seiten mit mindestens einer Führungsfläche (16a) und mit mindestens einer Gestaltungsfläche (17a), die in radialer Richtung nach innen hin von der Führungsfläche (16a) einen Abstand (T) aufweist, der der Dicke des zu gestaltenden beschichtenden Films entspricht, und zwischen dem Gerät (13) und dem Einsatzglied (10) angeordnete Mittel (18), um das Gerät (13) radial nach außen zu drücken, umfaßt.

12. Verfahren nach Anspruch 11, bei dem die Führungsflächen (16a) mit einem in axialer Richtung des Rohres verlaufenden Abstand (D) zwischen sich angeordnet sind und die Gestaltungsfläche (17a) sich zwischen den beiden Führungsflächen (16a) erstreckt.

13. Verfahren nach Anspruch 11 oder 12, bei dem die Gestaltungsfläche (17a) in der Gestalt eines Bandes geformt ist, das in Spiralform relativ zu einer Achse des Einsatzglieds (10) verdreht ist.

14. Verfahren nach einem der Ansprüche 11 bis 13, bei dem das Einsatzglied (10) um eine Achse davon drehbar ist, wobei die Führungsflächen (16a) in Berührung mit der inneren Oberfläche des Rohres gehalten werden.

15. Verfahren nach einem der Ansprüche 11 bis 14, bei dem das Einsatzmittel (10) in dem Rohr entlang dessen innerer Oberfläche kreisdrehbar ist, wobei die Führungsfläche (16a) in Berührung mit der inneren Oberfläche gehalten wird.

16. Verfahren nach einem der Ansprüche 3 bis 15, bei dem das beschichtende Material mit Laserstrahlung durch einen Brenner bestrahlt wird, der umfaßt: einen im wesentlichen zylindrischen Brennerkörper (101), der an einem Ende einer optischen Faser (104), die Laserstrahlen überträgt, angebracht ist; in den Brennerkörper (101) montierte Linsenmittel (106), um die Laserstrahlen, die von der optischen Faser (104) in einer Längsrichtung des Brennerkörpers eingestrahlt werden, konvergieren zu lassen; ein im wesentlichen zylindrisches Rohr (109), das an einem Ende des Brennerkörpers (101) angebracht ist und in dessen Längsrichtung bewegbar ist und das (109) in seiner seitlichen Wandung eine Öffnung (110) hat; und einen Spiegel (111,124), der in das Rohr (109) montiert ist, um die Laserstrahlen zu reflektieren, die durch die Linsenmittel (106) hindurchpassiert sind, so daß die Laserstrahlen durch die Öffnung (110) ausgesandt werden.

17. Verfahren nach Anspruch 16, bei dem durch einen Rohrdurchlaß (105), der mit dem Inneren des Brennerkörpers (101) in Verbindung steht, Reinigungsgas zugeführt wird.

18. Verfahren nach Anspruch 16 oder 17, bei dem äußere Umfangsflächen des Brennerkörpers (101) und des Rohres (109) zu metallisch glänzenden Flächen wie Spiegeln ausgearbeitet sind.

19. Verfahren nach einem der Ansprüche 16 bis 18, bei dem der Spiegel (111) aus Metall, vorzugsweise Kupfer, gefertigt ist und eine reflektierende Fläche (112) hat, die als Spiegel ausgearbeitet ist.

20. Verfahren nach einem der Ansprüche 16 bis 18, bei dem der Spiegel (124) eine Spiegelplatte (123) umfaßt, die eine reflektierende Fläche bildet, und die Spiegelplatte durch Ankleben an ein Trägerglied (120) angebracht ist, das in dem Rohr (109) montiert ist.

## Revendications

1. Acier inoxydable résistant à la corrosion, comprenant une couche de placage fondue formée sur une surface du substrat en acier inoxydable contenant du chrome et du nickel, la couche de placage étant un alliage Fe-Cr-Ni-Mo composé de 40 à 60% en poids de Fe, 15 à 50% en poids de Cr, plus de 16 à 30% en poids de Ni et 1 à 3% en poids de Mo.

2. Acier inoxydable selon la revendication 1, dans lequel la teneur en chrome de la couche de placage est supérieure à celle du substrat.

3. Procédé de fabrication d'un acier inoxydable résistant à la corrosion selon la revendication 1, dans lequel une surface d'un substrat en acier inoxydable contenant du chrome et du nickel est revêtue d'un matériau contenant du chrome, du nickel et du molybdène, et le matériau de revêtement est fondu de manière à se mélanger avec une partie du substrat et à produire une couche de placage composée de 40 à 60% en poids de Fe, 15 à 50% en poids de Cr, plus de 16 à 30% en poids de Ni et 1 à 3% en poids de Mo; le matériau de revêtement comprenant une poudre métallique composée de 20 à 60% en poids de Cr, 30 à 70% en poids de Ni et le restant de Mo, ou composée de 20 à 60% en poids de Cr, 20 à 60% en poids de Ni, moins de 20% en poids de Mo et le restant de Fe.

4. Procédé selon la revendication 3, dans lequel la couche de placage possède une composition qui est essentiellement intermédiaire, pour ce qui est du rapport de ses constituants, entre la composition du matériau de revêtement et la composition du substrat.

5. Procédé selon la revendication 3 ou 4, dans lequel le matériau de revêtement est fondu par un rayonnement laser.

6. Procédé selon l'une quelconque des revendications 3 à 5, dans lequel un liant est mélangé avec la poudre métallique.

7. Procédé selon la revendication 6, dans lequel le liant contient C: 20 à 50% en poids; Al₂O₃: moins de 40% en poids; SiO₂: 10 à 60% en poids; et H: moins de 2% en poids.

8. Procédé selon la revendication 6 ou 7, dans lequel le liant est de couleur noire.

9. Procédé selon l'une quelconque des revendications 3 à 8, comprenant, avant l'application du matériau de revêtement, le dégraissage de la surface du substrat et l'exposition de la surface à de l'air atmosphérique pour former par dessus un revêtement passif.

10. Procédé selon l'une quelconque des revendications 3 à 9, dans lequel des rayons laser convergent sur le matériau de revêtement et se déplacent le long de la surface du substrat.

11. Procédé selon l'une quelconque des revendications 3 à 10, dans lequel ladite surface est la surface intérieuré d'un tuyau, et on donne au matériau de revêtement la forme d'un film de revêtement à l'aide d'un dispositif comprenant un élément d'insertion (10) à insérer dans le tube, un gabarit de formage du film de revêtement (13) fixé à un côté de l'élément d'insertion (10), le gabarit (13) étant muni, sur sa face externe, d'au moins une surface guide (16a) et d'au moins une surface de formage (17a) distante de la surface guide (16a), dans la direction radiale vers l'intérieur, d'une distance (T) correspondant à l'épaisseur du film de revêtement à former, et un moyen (18) intercalé entre le gabarit (13) et l'élément d'insertion (10) pour pousser le gabarit (13) dans la direction radiale vers l'extérieur.

12. Procédé selon la revendication 11, dans lequel deux surfaces guides (16a) sont placées à une distance (D) entre elles dans la direction axiale du tuyau, et la surface de formage (17a) s'étend entre les deux surfaces guides (16a).

13. Procédé selon la revendication 11 ou 12, dans lequel la surface de formage (17a) est formée en bande, tordue en spirale par rapport à l'axe de l'élément d'insertion (10).

14. Procédé selon l'une quelconque des revendications 11 à 13, dans lequel l'élément d'insertion (10) peut tourner autour de son axe, la surface guide (16a) étant maintenue au contact de la surface interne du tuyau.

15. Procédé selon l'une quelconque des revendications 11 à 14, dans lequel l'élément d'insertion (10) peut tourner à l'intérieur du tuyau le long de sa surface interne, la surface guide (16a) étant maintenue au contact de la surface interne.

16. Procédé selon l'une quelconque des revendications 3 à 15, dans lequel le matériau de revêtement est irradié avec un rayonnement laser par une chalumeau comprenant: un corps de chalumeau de forme générale cylindrique (101) fixé à une extrémité d'une fibre optique (104) transmettant les rayons laser; un dispositif de lentilles (106) monté dans le corps de chalumeau (101) pour faire converger les rayons laser irradiés depuis la fibre optique (104) dans une direction longitudinale du corps du chalumeau; un tube de forme générale cylindrique (109) fixé à une extrémité du corps de chalumeau (101) et pouvant se déplacer dans sa direction longitudinale, le tube (109) étant muni d'une ouverture (110) dans sa paroi latérale; et un miroir (111; 124) monté dans le tube (109) pour refléter les rayons laser ayant traversé le dispositif de lentilles (106) de manière que les rayons laser soient émis à travers l'ouverture (110).

17. Procédé selon la revendication 16, dans lequel le gaz de purge est amené par un passage tubulaire (105) communiquant avec l'intérieur du corps de chalumeau (101).

18. Procédé selon la revendication 16 ou 17, dans lequel les surfaces périphériques extérieures du corps de chalumeau (101) et du tube (109) ont un fini de faces brillantes métallisées, comme des miroirs.

19. Procédé selon l'une quelconque des revendications 16 à 18, dans lequel le miroir (111) est fait de métal, de préférence de cuivre, et possède une surface réfléchissante (112) qui a le fini d'un miroir.

20. Procédé selon l'une quelconque des revendications 16 à 18, dans lequel le miroir (124) comprend un miroir plan (123) formant une surface réfléchissante, le miroir plan étant fixé par adhérence à un élément de support (120) monté dans le tube (109).
